# EUROPÄISCHE PATENTSCHRIFT

(11) **EP 2 244 580 B1**
(45) Veröffentlichungstag und Bekanntmachung des Hinweises auf die Patenterteilung: **18.01.2017**
(21) Anmeldenummer: 09710041.6
(22) Anmeldetag: 04.02.2009
(51) Int. Cl.: A22C 17/12, A22C 25/17

(54) **VORRICHTUNG UND VERFAHREN ZUM TRENNEN VON OBERFLÄCHENSCHICHTEN BEI PRODUKTEN DER NAHRUNGSMITTELINDUSTRIE**
DEVICE AND METHOD FOR SEPARATING SURFACE LAYERS IN PRODUCTS OF THE FOOD INDUSTRY
DISPOSITIF ET PROCÉDÉ PERMETTANT D'ÔTER LA COUCHE SUPERFICIELLE DE PRODUITS DESTINÉS À L'ALIMENTATION

(30) Priorität: 15.02.2008 DE 102008009922
(43) Veröffentlichungstag der Anmeldung: 03.11.2010
(73) Patentinhaber: Nordischer Maschinenbau Rud. Baader GmbH + Co. KG, 23560 Lübeck (DE)
(72) Erfinder: GRABAU, Thomas, 23564 Lübeck (DE)
(74) Vertreter: Stork Bamberger
(86) Internationale Anmeldenummer: PCT/EP2009/000999
(87) Internationale Veröffentlichungsnummer: WO 2009/100912

(56) Entgegenhaltungen:
- WO-A-01/91567
- WO-A-02/078453
- DE-A1- 19 834 866
- DE-B3-102005 047 752
- NL-C1- 1 007 704

## Beschreibung

Die Erfindung betrifft eine Vorrichtung zum Trennen von Oberflächenschichten bei Produkten der Nahrungsmittelindustrie, umfassend ein Transportelement zum Transportieren der Produkte von einem Einlaufbereich zu einem Auslaufbereich, wobei das Transportelement mindestens im Auslaufbereich um ein im Wesentlichen zylindrisch ausgebildetes Umlenkelement geführt ist, ein Andrückelement zum Andrücken der Produkte an das Transportelement sowie ein Trennelement zum Trennen der Oberflächenschicht vom Produkt, wobei das Trennelement unter Bildung eines Trennspaltes zwischen dem Trennelement und dem Transportelement im Auslaufbereich des Transportelementes angeordnet ist. Des Weiteren betrifft die Erfindung ein Verfahren zum Entfernen von Oberflächenschichten bei Produkten der Nahrungsmittelindustrie, umfassend die Schritte: Transportieren des zu bearbeitenden Produkts mittels eines Transportelementes von einem Einlaufbereich in einen Auslaufbereich, Zuführen des Produkts in einen Trennspalt, der zwischen einem im Auslaufbereich, befindlichen Trennelement und dem Transportelement gebildet ist, Andrücken des zu bearbeitenden Produktes mittels eines Andrückelementes an das Transportelement während des Trennvorgangs, und Trennen einer Oberflächenschicht mittels des in dem Auslaufbereich des Transportelementes angeordneten Trennelementes.

Eine gattungsgemässe Vorrichtung bzw. ein gattungsgemässes Verfahren ist aus WO 02/078453 bekannt.

Solche Vorrichtungen und Verfahren kommen in der Nahrungsmittelindustrie und insbesondere in der Fisch verarbeitenden Industrie zum Einsatz. Am Beispiel der Verarbeitung von Fisch bedeutet dies z.B., dass die Haut und/oder die darunter liegende Fettschicht vom Filet getrennt wird. Die Trennung der Haut- und/oder Fettschicht vom Filet kann dabei in einem Trennschnitt oder in mehreren nacheinander folgenden Trennschnitten erfolgen. Dabei verlaufen die Trennelemente zum Trennen der Oberflächenschicht üblicherweise geradlinig. Das bedeutet, dass sich zwischen dem Trennelement und dem Transportelement bzw. dem im Bereich des Trennelementes liegenden Umlenkelementes, das quasi als Schnittgegenlage dient, ein über die gesamte Breite des Transportelementes gleich bleibender Trennspalt ergibt. Dies führt dazu, dass die abzutrennende Oberflächenschicht über die gesamte Breite dieselbe Dicke aufweist. Insbesondere für die Fischverarbeitung ist es jedoch zu Zwecken der Ausbeuteverbesserung notwendig, eine über die Breite veränderliche Schnitttiefe zu erzeugen. Beispielsweise weist der Lachs im Bereich der Hauptgräte eine dickere Fettschicht auf als in Bereichen, die von der Hauptgräte entfern liegen. Auch verändert sich die Dicke und Breite der Fettschicht in Längsrichtung des Filets.

Es hat sich jedoch als schwierig erwiesen, das Trennelement derart auszuführen bzw. anzusteuern, dass eine über die Breite variable Schnitttiefe erreichbar ist. Es wurden daher Anstrengungen unternommen, das Transportelement bzw. darunter liegende Elemente entsprechend anzupassen. Aus der EP 1 365 655 B1 ist beispielsweise eine Vorrichtung bekannt, bei der ein Förderband als Tragfläche für die Produkte dient. Diesem Förderband ist eine justierbare Unterstützung mit einem einstellbaren Profil quer zur Transportrichtung der Produkte zugeordnet. Die Unterstützung liegt unterhalb des Förderbandes und umfasst heb- und senkbare Elemente, die zum Erzeugen des einen Prozessspalt bildenden Profils Seite an Seite quer zur Transportrichtung angeordnet sind. Diese Vorrichtung weist jedoch den Nachteil auf, dass sie einen hohen Steuerungsaufwand benötigt. Des Weiteren ist die konstruktive Gestaltung sehr komplex und damit kostenintensiv. Es ist daher Aufgabe der vorliegenden Erfindung, eine einfache und leicht handhabbare Vorrichtung zu schaffen, die neben dem Trennspalt einen variablen Prozessspalt gewährleistet. Des Weiteren ist es Aufgabe der Erfindung, ein entsprechendes Verfahren vorzuschlagen.

Diese Aufgabe wird zum einen durch eine Vorrichtung mit den eingangs genannten Merkmalen dadurch gelöst, dass das im Auslaufbereich angeordnete Umlenkelement zur Ausübung einer Rotationsbewegung ausgebildet und entsprechend ansteuerbar ist und eine in axialer Richtung und/oder Umfangsrichtung zur Bildung eines Prozessspaltes wechselnde Querschnittsform aufweist. Dadurch wird auf überraschend einfache und wirkungsvolle Weise die Möglichkeit eines variablen Prozessspaltes geschaffen. Anders ausgedrückt ermöglicht die wechselnde Gestalt bzw. Form des Umlenkelementes auf der dem Trennelement zugewandten Seite einerseits und die Ansteuerbarkeit des Umlenkelementes andererseits, dass der Prozessspalt variabel ist, so dass produktspezifische Trennvorgänge realisierbar sind.

Eine zweckmäßige Weiterbildung der Erfindung zeichnet sich dadurch aus, dass das Umlenkelement im Bereich der Mantelfläche mindestens abschnittsweise konkav ausgebildet ist. Dadurch kann der Prozessspalt mindestens partiell größer bzw. tiefer ausgebildet sein, so dass z.B. im Bereich der Hauptgräte mehr Fett abgetragen werden kann als in den Randbereichen eines Filets.

Vorzugsweise variiert die konkave Ausbildung der Mantelfläche des Umlenkelementes sowohl in axialer Richtung als auch in Umfangsrichtung in der Breite und/oder Tiefe. Die axiale Richtung bezeichnet die Richtung quer zur Transportrichtung der Produkte. Die Umfangsrichtung beschreibt die Rotationsrichtung des Umlenkelementes. Somit lassen sich unterschiedliche Profile bzw. Prozessspalte sowohl in Längsrichtung der Produkte als auch in deren Querrichtung einstellen.

Eine bevorzugte Weiterbildung der Erfindung ist dadurch gekennzeichnet, dass das Umlenkelement während des Trennvorgangs zur Veränderung des Prozessspaltes ansteuerbar ist. Durch Drehen des Umlenkelementes kann der Prozessspalt gezielt verändert werden, und zwar von Produkt zu Produkt oder auch während der Verarbeitung eines Produktes.

Zum anderen wird die Aufgabe durch ein Verfahren mit den eingangs genannten Schritten dadurch gelöst, dass das Umlenkelement zur Ausübung einer Rotationsbewegung angesteuert wird, so dass zusätzlich zum Trennspalt ein veränderlicher Prozessspalt gebildet wird. Die sich daraus ergebenden Vorteile wurden bereits im Zusammenhang mit der erfindungsgemäßen Vorrichtung erläutert. Zur Vermeidung von Wiederholungen wird auf die entsprechenden Passagen verwiesen.

Weitere zweckmäßige und/oder vorteilhafte Merkmale und Ausgestaltungen ergeben sich aus den Unteransprüchen und der Beschreibung. Eine besonders bevorzugte Ausführungsform sowie das Verfahrensprinzip werden anhand der beigefügten Zeichnung näher erläutert. In der Zeichnung zeigt:
- Fig. 1: eine schematische Darstellung der erfindungsgemäßen Vorrichtung im Ausschnitt,
- Fig. 2: eine Draufsicht auf ein im Wesentlichen zylinderförmiges Umlenkelement der Vorrichtung gemäß Figur 1,
- Fig. 3: das Umlenkelement gemäß Figur 2 mit abgewickelter Mantelfläche,
- Fig. 4: eine Schnittansicht des Umlenkelementes im Schnitt X-X gemäß Figur 2, und
- Fig. 5: eine Halbschnittdarstellung des Umlenkelementes in den in Figur 4 gezeigten Ebenen.

Die in den Figuren gezeigte Vorrichtung dient zum Trennen einer Fettschicht von Filets der Spezies Lachs. Selbstverständlich ist die Vorrichtung auch zum Bearbeiten/Verarbeiten anderer Produkte und insbesondere auch zum Trennen anderer Oberflächenschichten, wie z.B. Hautschichten oder dergleichen geeignet und einsetzbar.

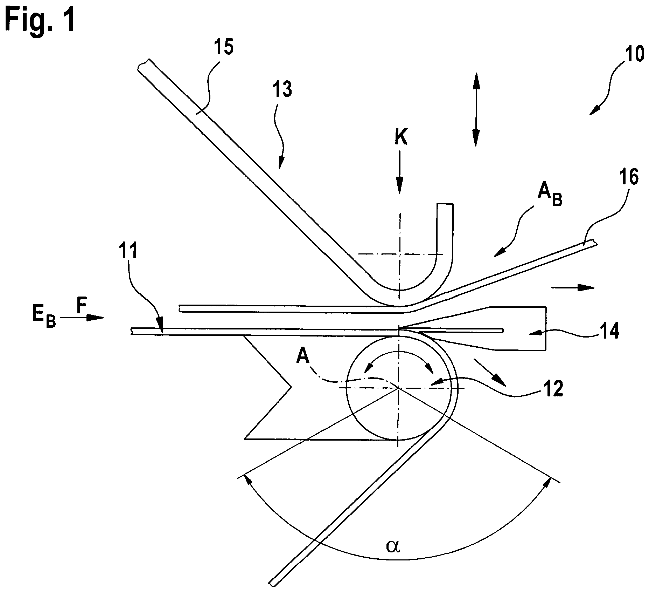

Die in Figur 1 in Wesentlichen Teilen dargestellte Vorrichtung 10 zum Trennen von Hautschichten und/oder Fettschichten von Fischfilets umfasst ein Transportelement 11. Das Transportelement 11 ist vorzugsweise als endlos umlaufendes und flexibles Förderband oder dergleichen ausgebildet. Andere Ausbildungen des Transportelementes 11, z.B. als Saugband, flexible Förderkette oder dergleichen, sind ebenfalls möglich. Das Transportelement 11 ist um mehrere Antriebs- und/oder Umlenkelemente geführt, insbesondere auch um ein im Wesentlichen zylindrisch ausgebildetes Umlenkelement 12. Die zu bearbeitenden Produkte werden in Förderrichtung F von einem Einlaufbereich E_{B} zu einem Auslaufbereich A_{B} transportiert. Im Auslaufbereich A_{B} des Transportelementes 11 ist das zylinderförmige Umlenkelement 12 angeordnet.

Des Weiteren umfasst die Vorrichtung 10 ein Andrückelement 13 zum Andrücken der Produkte an das Transportelement 11 sowie ein Trennelement 14 zum Trennen der Oberflächenschicht vom Produkt. Das Trennelement 14 ist ebenfalls im Auslaufbereich, A_{B} des Transportelementes 11 angeordnet und bildet zwischen sich und dem Transportelement 11 einen Trennspalt. Zur Einstellung der Größe des Trennspaltes zwischen dem Trennelement 14 und dem Transportelement 11 ist das Trennelement 14 bewegbar ausgebildet. Das Andrückelement 13 ist ebenfalls einstellbar ausgebildet, und zwar bevorzugt in vertikaler Richtung zur Förderebene zur Veränderung des Abstandes zum Transportelement 11. Das Andrückelement 13 besteht bevorzugt aus einem Andrückfinger 15 und einem Führungsband 16 oder dergleichen. Das Andrückelement 13, das auch jede andere übliche Ausbildung aufweisen kann, erstreckt sich mindestens über die Produktbreite, bevorzugt jedoch über die gesamte Breite des Transportelementes 11. In Bezug auf das Umlenkelement 12, das weiter unten detailliert beschrieben wird, befindet sich das Andrückelement 13 direkt oberhalb des Umlenkelementes 12. Bevorzugt ist das Andrückelement 13 derart angeordnet, dass die Andrückkraft K senkrecht zur Achse A des Umlenkelementes 12 gerichtet ist. Das Andrückelement 13 kann auch als Führungselement ausgebildet sein und/oder als Führung dienen. In weiteren nicht dargstellten Ausführungsformen kann dem Andrückelement 13 auch ein Führungselement zugeordnet sein, das in Förderrichtung F vor dem Andrückelement 13 liegt und unterschiedliche Ausbildungen aufweisen kann. Insbesondere kann das Führungselement an die Kontur der Produkte angepasst und kaskadenartig ausgebildet bzw. angeordnet sein.

Das im Auslaufbereich A_{B} des Transportelementes 11 angeordnete Umlenkelement 12 ist mindestens partiell bewegbar ausgebildet. Dazu ist das Umlenkelement 12 zur Ausübung einer Rotationsbewegung ausgebildet und entsprechend ansteuerbar. In der gezeigten Ausführungsform ist das zylindrische Umlenkelement 12 um eine Achse A drehbar. Die Drehung um die Achse A kann z.B. in einem definierten und durch Anschläge oder dergleichen begrenzten Winkelbereich α oder umlaufend erfolgen. Dabei weist die Mantelfläche M_{F} des Umlenkelementes 12 eine in axialer Richtung und/oder Umfangsrichtung wechselnde Querschnittsform auf. Durch die spezielle
Formgebung des Umlenkelementes 12 im Bereich der Mantelfläche M_{F} wird zusätzlich zum Trennspalt ein Prozessspalt gebildet bzw. definiert, der eine individuelle und insbesondere auch veränderbare Schnittführung gewährleistet. Anders ausgedrückt kann der Prozessspalt sowohl in der Breite, also quer zur Förderrichtung F, als auch in der Tiefe, also vertikal zur Förderebene separat vom Trennspalt bzw. unabhängig von diesem verändert werden.

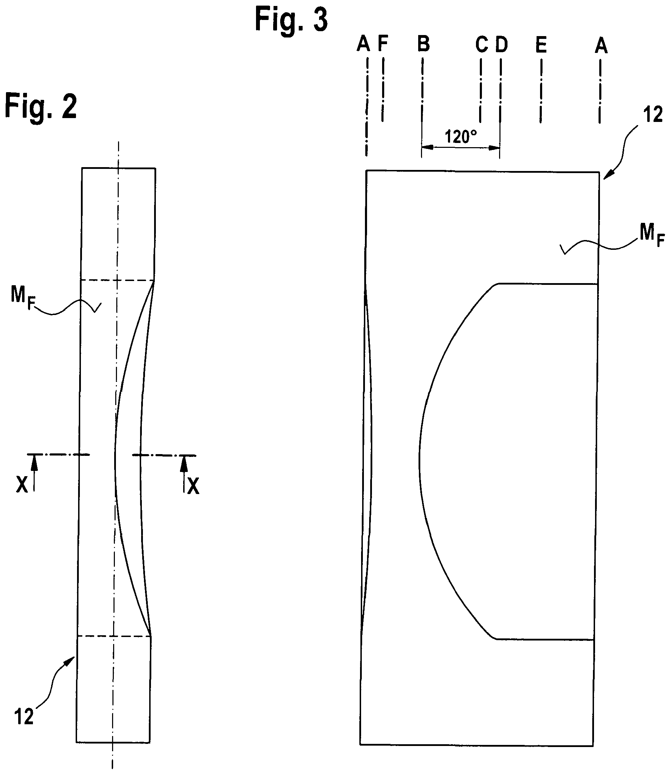

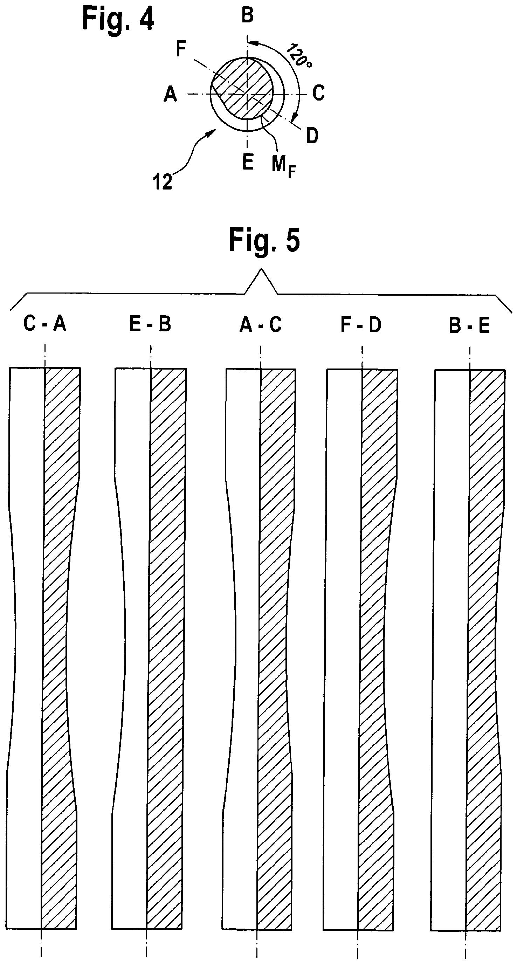

Vorzugsweise ist das Umlenkelement 12 im Bereich seiner Mantelfläche M_{F} mindestens abschnittsweise konkav ausgebildet. Die in der Mantelfläche M_{F} ausgebildete Ausnehmung kann jedoch auch andere Formen und Gestalten annehmen. Die konkave Ausbildung der Mantelfläche M_{F} des Umlenkelementes 12 variiert sowohl in axialer Richtung als auch in der Umfangsrichtung in der Breite und/oder der Tiefe, wie dies insbesondere z.B. aus den Figuren 2 bis 4 deutlich wird. Die konkave Ausnehmung erstreckt sich vorzugsweise über einen Teil der Breite des Umlenkelementes 12 (siehe Figuren 2 und 3). Die Ausnehmung kann sich aber auch über die gesamte Breite erstrecken. Auch in Umfangsrichtung ist die Ausnehmung nur teilweise ausgebildet (siehe Figur 4). Eine Ausbildung der Ausnehmung über den gesamten Umfang ist aber auch möglich. Das Umlenkelement 12 ist (an-)steuerbar, derart, dass wahlweise während eines Trennschnittes an einem Produkt oder zwischen Trennschnitten von Produkt zu Produkt durch Rotation des Umlenkelementes 12 eine unterschiedliche Kontur als Gegenlage zum Trennelement 14 dient, so dass sich die Schnittführung ändert. Anders ausgedrückt lässt sich der Prozessspalt kontinuierlich oder intermittierend verändern.

Anhand der Figuren 2 bis 5 wird die Ausbildung des Umlenkelementes 12 besonders deutlich. Beispielsweise entspricht der Abschnitt zwischen den Ebenen B und D, der in Figur 3 als abgewickelte Mantelfläche M_{F} dargestellt ist, dem Umfangsabschnitt B-D von 120° in Figur 4. In der Figur 5 sind zur Veranschaulichung die in Figur 4 angedeuteten Schnitte C-A, E-B, A-C, F-D und B-E dargstellt.

Der Vorrichtung 10 kann des Weiteren zur Steuerung des Umlenkelementes 12 ein (nicht dargestelltes) Mittel zur Erkennung geometrischer Daten und/oder Bilddaten der Produkte zugeordnet sein. Zur Umsetzung der erkannten Daten in eine entsprechende Rotationsbewegung des Umlenkelementes 12 umfasst die Vorrichtung 10 ein (ebenfalls nicht dargstelltes) Steuermittel. Das Steuermittel kann zur Steuerung des Umlenkelementes 12 und/oder des Trennelementes 14 ausgebildet und eingerichtet sein. Steuermittel und Mittel zur Erkennung der geometrischen Daten und/oder Bilddaten stehen dazu in Wirkverbindung miteinander.

Zum Antrieb des Transportelementes 11 eignet sich besonders ein so genannter Quetschantrieb. Andere übliche Antriebe sind aber ebenfalls einsetzbar. Das Trennelement 14 kann ein Bandmesser, ein oszillierendes Messer oder jedes andere geeignete Schneid- und/oder Trennmittel sein. Das Andrückelement 15 ist vorzugsweise auf der dem Produkt zugewandten Seite an die Kontur des jeweiligen Produktes angepasst. Ebene oder gewölbte oder anderweitig geformte Ausbildungen sind aber auch einsetzbar. Das Umlenkelement 12 kann in nicht dargstellten Ausführungsformen auch eine profilierte und schwenkbare Umlenkkante oder dergleichen sein.

Im Folgenden wird das Verfahrensprinzip anhand der Figuren näher erläutert: Ein erstes Produkt wird vom Einlaufbereich E_{B} mittels des Transportelementes 11 zum Auslaufbereich A_{B} gefördert. Das Trennelement 14 ist unter Bildung eines Trennspaltes relativ zum Transportelement 11 eingestellt. Das Produkt läuft auf dem Transportelement 11 liegend unter das Andrückelement 13, das das Produkt mit einer vorzugsweise definierten Kraft gegen das Transportelement 11 drückt. Durch das Transportelement 11 wird das Produkt gegen die Messer- oder Schneidkante des feststehenden, umlaufenden oder oszillierenden Trennelementes 14 gefördert. Während des Trennprozesses drückt das Andrückelement 13 das Produkt mit einer Andrückkraft F auf das Transportelement 11, wodurch sich das flexible Transportelement 11 und damit auch das Produkt an die Kontur des unterhalb eines Trums des Transportelementes 11 angeordnete Umlenkelement 12 anschmiegt. Durch das Weiterfördern des Produktes wird die Oberflächenschicht, also beispielsweise eine Haut- und/oder Fettschicht vom Filet getrennt. Die abgetrennte Oberflächenschicht wird schräg nach unten zwischen dem Trennelement 14 und dem Transportelement 11 abgeführt, während das Filet schräg nach oben zwischen dem Trennelement 14 und dem Führungsband 15 des Andrückelementes 13 abgeführt wird.

Die Schnittführung kann während des Trennprozesses variiert werden, indem das Umlenkelement 12 entgegen dem Uhrzeigersinn oder im Uhrzeigersinn gedreht wird, so dass dem Trennelement 14 eine veränderte Kontur als Gegenlage gegenüber liegt. Die Steuerung des Umlenkelementes 12 kann aber z.B. auch nach einem Produktwechsel erfolgen, so dass eine Anpassung des Prozessspaltes produktspezifisch erfolgt.

## Patentansprüche

1. Vorrichtung (10) zum Trennen von Oberflächenschichten bei Produkten der Nahrungsmittelindustrie, umfassend ein Transportelement (11) zum Transportieren der Produkte von einem Einlaufbereich zu einem Auslaufbereich, wobei das Transportelement (11) mindestens im Auslaufbereich um ein im Wesentlichen zylindrisch ausgebildetes Umlenkelement (12) geführt ist, ein Andrückelement (13) zum Andrücken der Produkte an das Transportelement (11) sowie ein Trennelement (14) zum Trennen der Oberflächenschicht vom Produkt, wobei das Trennelement (14) unter Bildung eines Trennspaltes zwischen dem Trennelement (14) und dem Transportelement (11) im Auslaufbereich des Transportelementes (11) angeordnet ist, **dadurch gekennzeichnet, dass** das im Auslaufbereich angeordnete Umlenkelement (12) zur Ausübung einer Rotationsbewegung ausgebildet und entsprechend ansteuerbar ist und eine in axialer Richtung und/oder Umfangsrichtung zur Bildung eines Prozessspaltes wechselnde Querschnittsform aufweist.

2. Vorrichtung nach Anspruch 1, **dadurch gekennzeichnet, dass** das Umlenkelement (12) im Bereich der Mantelfläche M_{F} mindestens abschnittsweise konkav ausgebildet ist.

3. Vorrichtung nach Anspruch 2, **dadurch gekennzeichnet, dass** die konkave Ausbildung der Mantelfläche M_{F} des Umlenkelementes (12) sowohl in axialer Richtung als auch in Umfangsrichtung in der Breite und/oder der Tiefe variiert.

4. Vorrichtung nach einem der Ansprüche 1 bis 3, **dadurch gekennzeichnet, dass** der Vorrichtung (10) zur Steuerung des Umlenkelementes (12) ein Mittel zur Erkennung geometrischer Daten und/oder Bilddaten der Produkte zugeordnet ist.

5. Vorrichtung nach Anspruch 4, **dadurch gekennzeichnet, dass** die Vorrichtung (10) Steuermittel zur Steuerung des Umlenkelementes (12) und/oder des Trennelementes (14) umfasst, wobei das Steuermittel und die Mittel zur Erkennung der geometrischen Daten und/oder Bilddaten in Wirkverbindung miteinander stehen.

6. Vorrichtung nach einem der Ansprüche 1 bis 5, **dadurch gekennzeichnet, dass** das Umlenkelement (12) während des Trennvorgangs zur Veränderung des Prozessspaltes ansteuerbar ist.

7. Vorrichtung nach einem der Ansprüche 1 bis 6, **dadurch gekennzeichnet, dass** der Trennspalt zwischen dem Trennelement (14) und dem Transportelement (11) einstellbar ist.

8. Vorrichtung nach einem der Ansprüche 1 bis 7, **dadurch gekennzeichnet, dass** das Transportelement (11) ein endlos umlaufender Transportgurt ist und diesem ein Quetschantrieb zugeordnet ist.

9. Vorrichtung nach einem der Ansprüche 1 bis 8, **dadurch gekennzeichnet, dass** das Trennelement (14) ein Bandmesser ist.

10. Vorrichtung nach einem der Ansprüche 1 bis 8, **dadurch gekennzeichnet, dass** das Trennelement (14) ein oszillierendes Messer ist.

11. Vorrichtung nach einem der Ansprüche 1 bis 10, **dadurch gekennzeichnet, dass** das Andrückelement (13) auf der dem Produkt zugewandten Seite an die Kontur des jeweiligen Produktes angepasst ist.

12. Vorrichtung nach einem der Ansprüche 1 bis 11, **dadurch gekennzeichnet, dass** sie zum Trennen von Hautschichten und/oder Fettschichten von Fischfilets ausgebildet und eingerichtet ist.

13. Verfahren zum Entfernen von Oberflächenschichten bei Produkten der Nahrungsmittelindustrie, umfassend die Schritte:
- Transportieren des zu bearbeitenden Produkts mittels eines Transportelementes (11) von einem Einlaufbereich in einen Auslaufbereich,
- Zuführen des Produkts in einen Trennspalt, der zwischen einem im Auslaufbereich befindlichen Trennelement (14) und dem Transportelement (11) gebildet ist,
- Andrücken des zu bearbeitenden Produktes mittels eines Andrückelementes (13) an das Transportelement (11) während des Trennvorgangs, und
- Trennen einer Oberflächenschicht mittels des in dem Auslaufbereich des Transportelementes (11) angeordneten Trennelementes (14),
**dadurch gekennzeichnet, dass** das Umlenkelement (12) zur Ausübung einer Rotationsbewegung angesteuert wird, so dass zusätzlich zum Trennspalt ein veränderlicher Prozessspalt gebildet wird.

14. Verfahren nach Anspruch 13, **dadurch gekennzeichnet, dass** der Prozessspalt während des Trennens verändert wird, wobei der Prozessspalt sowohl in axialer Richtung als auch in Umfangsrichtung in der Breite und/oder Tiefe verändert wird.

15. Verfahren nach Anspruch 13 oder 14, **dadurch gekennzeichnet, dass** die Ansteuerung des Umlenkelementes (12) in Abhängigkeit von zuvor ermittelten geometrischen Daten und/oder Bilddaten erfolgt.

## Claims

1. Apparatus (10) for separating surface layers in products of the food industry, comprising a transport element (11) for transporting the products from an input region to an output region, wherein the transport element (11) is guided at least in the output region round a substantially cylindrical deflecting element (12), a pressure element (13) for pressing the products against the transport element (11), and a separating element (14) for separating the surface layer from the product, wherein the separating element (14) is arranged in the output region of the transport element (11), forming a separating gap between the separating element (14) and the transport element (11), **characterised in that** the deflecting element (12) arranged in the output region is designed to perform a rotational movement and can be controlled accordingly and has a cross-sectional shape which varies in the axial direction and/or circumferential direction to form a process gap.

2. Apparatus according to claim 1, **characterised in that** the deflecting element (12) is at least sectionally of concave construction in the region of the peripheral surface M_{F}.

3. Apparatus according to claim 2, **characterised in that** the concave construction of the peripheral surface M_{F} of the deflecting element (12) varies in width and/or depth both in the axial direction and in the circumferential direction.

4. Apparatus according to any one of claims 1 to 3, **characterised in that** the apparatus (10) for controlling the deflecting element (12) is allocated a means for detecting geometrical data and/or image data of the products.

5. Apparatus according to claim 4, **characterised in that** the apparatus (10) comprises control means for controlling the deflecting element (12) and/or the separating element (14), wherein the control means and the means for detecting the geometrical data and/or image data are operatively connected to each other.

6. Apparatus according to any one of claims 1 to 5, **characterised in that** the deflecting element (12) is controllable during the separating operation to vary the process gap.

7. Apparatus according to any one of claims 1 to 6, **characterised in that** the separating gap between the separating element (14) and the transport element (11) is adjustable.

8. Apparatus according to any one of claims 1 to 7, **characterised in that** the transport element (11) is an endlessly rotating transport belt and is allocated a squeeze drive.

9. Apparatus according to any one of claims 1 to 8, **characterised in that** the separating element (14) is a band saw.

10. Apparatus according to any one of claims 1 to 8 , **characterised in that** the separating element (14) is an oscillating blade.

11. Apparatus according to any one of claims 1 to 10, **characterised in that** the pressure element (13) is adapted to the contour of the respective product on the side facing towards the product.

12. Apparatus according to any one of claims 1 to 11, **characterised in that** it is constructed and designed to separate skin layers and/or fat layers from fish fillets.

13. Method for removing surface layers in products of the food industry, comprising the steps of:
- transporting the product to be treated by means of a transport element (11) from an input region to an output region,
- delivering the product to a separating gap which is formed between a separating element (14) located in the output region and the transport element (11),
- pressing the product to be treated by means of a pressure element (13) against the transport element (11) during the separating operation, and
- separating a surface layer by means of the separating element (14) arranged in the output region of the transport element (11),
**characterised in that** the deflecting element (12) is controlled to perform a rotational movement, so that a variable process gap is formed in addition to the separating gap.

14. Method according to claim 13, **characterised in that** the process gap is varied during separation, wherein the process gap is varied in width and/or depth both in the axial direction and in the circumferential direction.

15. Method according to claim 13 or 14, **characterised in that** control of the deflecting element (12) takes place dependent on previously determined geometrical data and/or image data.

## Revendications

1. Dispositif (10) pour séparer des couches superficielles sur des produits de l'industrie alimentaire, comprenant un élément de transport (11) pour transporter les produits d'une zone d'entrée jusqu'à une zone de sortie, l'élément de transport (11) passant au moins dans la zone de sortie sur un élément de renvoi (12) de forme essentiellement cylindrique, un élément d'appui (13) pour appuyer les produits sur l'élément de transport (11), ainsi qu'un élément de séparation (14) pour séparer la couche superficielle du produit, l'élément de séparation (14) étant disposé, tout en formant une fente de séparation entre l'élément de séparation (14) et l'élément de transport (11), dans la zone de sortie de l'élément de transport (11), **caractérisé en ce que** l'élément de renvoi (12) disposé dans la zone de sortie est conformé pour un mouvement en rotation et est apte à être asservi de manière appropriée et présente, dans la direction axiale et/ou dans la direction circonférentielle, une forme alternante de section transversale pour former une fente de processus.

2. Dispositif selon la revendication 1, **caractérisé en ce que** l'élément de renvoi (12) présente, dans la zone de l'enveloppe M_{F}, au moins par zones, une forme concave.

3. Dispositif selon la revendication 2, **caractérisé en ce que** la forme concave de l'enveloppe M_{F} de l'élément de renvoi (12) varie aussi bien dans la direction axiale que dans la direction circonférentielle en largeur et/ou en profondeur.

4. Dispositif selon l'une des revendications 1 à 3, **caractérisé en ce qu'**il est associé au dispositif (10), pour la commande de l'élément de renvoi (12), un moyen pour reconnaître des données géométriques et/ou des données d'image des produits.

5. Dispositif selon la revendication 4, **caractérisé en ce que** le dispositif (10) comprend des moyens de commande pour la commande de l'élément de renvoi (12) et/ou de l'élément de séparation (14), le moyen de commande et les moyens pour la reconnaissance des données géométriques et/ou des données d'image étant en liaison d'effet les uns avec les autres.

6. Dispositif selon l'une des revendications 1 à 5, **caractérisé en ce que** l'élément de renvoi (12) est apte à être asservi pendant l'action de séparation, pour un changement de la fente de processus.

7. Dispositif selon l'une des revendications 1 à 6, **caractérisé en ce que** la fente de processus entre l'élément de séparation (14) et l'élément de transport (11) est réglable.

8. Dispositif selon l'une des revendications 1 à 7, **caractérisé en ce que** l'élément de transport (11) est une bande transporteuse sans fin et **en ce qu'**un entraînement à écrasement est associé à celle-ci.

9. Dispositif selon l'une des revendications 1 à 8, **caractérisé en ce que** l'élément de séparation (14) est un couteau à bande.

10. Dispositif selon l'une des revendications 1 à 8, **caractérisé en ce que** l'élément de séparation (14) est un couteau oscillant.

11. Dispositif selon l'une des revendications 1 à 10, **caractérisé en ce que** l'élément d'appui (13) est adapté, du côté orienté vers le produit, aux contours du produit respectif.

12. Dispositif selon l'une des revendications 1 à 11, **caractérisé en ce qu'**il est conformé pour séparer des couches de peau et/ou des couches de graisse de filets de poisson.

13. Procédé pour séparer des couches superficielles sur des produits de l'industrie alimentaire, comprenant les étapes :
- transporter le produit à traiter à l'aide d'un élément de transport (11) d'une zone d'entrée jusqu'à une zone de sortie,
- acheminer des produits dans une fente de séparation qui est formée entre un élément de séparation (14) situé dans la zone de sortie et l'élément de transport (11),
- appuyer le produit à traiter, pendant l'action de séparation, à l'aide d'un élément d'appui (13) sur l'élément de transport (11) et
- séparer une couche de surface à l'aide de l'élément de séparation (14) disposé dans la zone de sortie de l'élément de transport (11),
**caractérisé en ce que** l'élément de renvoi (12) est asservi pour effectuer un mouvement de rotation, si bien que, en plus de la fente de séparation, une fente de processus variable soit formée.

14. Procédé selon la revendication 13, **caractérisé en ce que** la fente de processus est variée pendant l'action de séparation, la fente de processus étant variée aussi bien dans la direction axiale que dans la direction circonférentielle en largeur et/ou en profondeur.

15. Procédé selon la revendication 13 ou 14, **caractérisé en ce que** l'asservissement de l'élément de renvoi (12) est effectué en fonction de données géométriques et/ou de données d'image préalablement déterminées.
